# EUROPEAN PATENT APPLICATION

(11) **EP 3 569 830 A1**
(43) Date of publication of application: **20.11.2019**
(21) Application number: 19157086.0
(22) Date of filing: 14.02.2019
(51) Int. Cl.: F01K 25/06

(54) **THERMAL ENERGY RECOVERY DEVICE AND OIL DETECTION METHOD**

(30) Priority: 17.04.2018 JP 2018079219
(71) Applicant: Kabushiki Kaisha Kobe Seiko Sho (Kobe Steel, Ltd.), Kobe-shi, Hyogo 651-8585 (JP)
(72) Inventor: NAGAHIRA, Ayaka, Takasago-shi,, Hyogo 676-8670 (JP); ADACHI, Shigeto, Takasago-shi,, Hyogo 676-8670 (JP); NARUKAWA, Yutaka, Takasago-shi,, Hyogo 676-8670 (JP); NISHIMURA, Kazumasa, Takasago-shi,, Hyogo 676-8670 (JP)
(74) Representative: TBK

(57) **Abstract**

An oil detection device detecting lubricating oil separated in an oil separator and supplied to an expander has first and second light transmission portions through which light is transmitted to the inside/outside of an oil supply pipe supplying the lubricating oil from the oil separator to the expander, a light emitter emitting light toward the first light transmission portion, and a light receiver receiving the light emitted from the light emitter through the second light transmission portion. The light emitter is oriented such that the light emitted from the light emitter is refracted when entering the lubricating oil through the first light transmission portion. The light receiver is arranged such that reception of the light depends on refraction of the light emitted from the light emitter. The oil detection device detects the lubricating oil supplied to the expander based on the reception of the light by the light receiver.

## Description

### BACKGROUND OF THE INVENTION

### (FIELD OF THE INVENTION)

The present invention relates to a thermal energy recovery device and an oil detection method.

### (DESCRIPTION OF THE RELATED ART)

As a thermal energy recovery device, for example, a thermal energy recovery device described in JP 2011-122568 A is known. The thermal energy recovery device described in JP 2011-122568 A includes an expander, a condenser, a pump that pressurizes a working medium, an evaporator, and an oil separator that separates liquid lubricating oil mixed in the working medium which is evaporated in the evaporator from the working medium, and an oil supply pipe for supplying the lubricating oil of the oil separator to a bearing of the expander.

In the above thermal energy recovery device, the lubricating oil supplied from the oil separator to the bearing of the expander flows through the oil supply pipe. Thus, there is a problem that an operator cannot confirm whether or not the lubricating oil is being actually supplied to the bearing of the expander. Therefore, in order to let the operator confirm the lubricating oil supplied to the bearing of the expander, it is thought to make part of the oil supply pipe transparent. However, particularly in a case where the lubricating oil supplied from the oil separator to the bearing of the expander is transparent, or in a case where a supply amount of the lubricating oil is small, a problem that it is difficult for the operator to confirm whether or not there is the lubricating oil in the oil supply pipe by his/her own eyes occurs.

Thus, the present invention is achieved based on the above problem, and an object thereof is to provide a thermal energy recovery device and an oil detection method capable of determining whether or not lubricating oil is being supplied from an oil separator to an expander.

### SUMMARY OF THE INVENTION

A thermal energy recovery device according to the present invention includes an expander that expands a gaseous working medium, a condenser that condenses the working medium expanded in the expander, a pump that pressurizes the working medium condensed in the condenser, a heater that heats the working medium pressurized in the pump with heat of a heat source medium, an oil separator that separates lubricating oil mixed in the working medium from the working medium, and an oil detection device that detects where or not there is the lubricating oil separated in the oil separator and supplied to the expander. The oil detection device has first and second light transmission portions through which light is transmitted to the inside and the outside of an oil supply pipe that supplies the lubricating oil from the oil separator to the expander, a light emitter that emits light toward the first light transmission portion, and a light receiver that receives the light emitted from the light emitter through the second light transmission portion. The light emitter is arranged in the direction in which the light emitted from the light emitter is refracted when entering the lubricating oil through the first light transmission portion. The light receiver is arranged at such a position that reception of the light depends on the refraction of the light emitted from the light emitter. The oil detection device detects whether or not there is the lubricating oil supplied to the expander based on the reception of the light by the light receiver.

With this configuration, the light receiver is arranged at such a position that the reception of the light depends on the refraction when the light emitted from the light emitter enters the lubricating oil through the first light transmission portion. Therefore, for example, the light receiver does not receive the light in a case where the light emitted from the light emitter enters the lubricating oil and is refracted, and receives the light in a case where the light does not enter the lubricating oil and is not refracted. Conversely, the light receiver receives the light in a case where the light emitted from the light emitter enters the lubricating oil and is refracted, and does not receive the light in a case where the light does not enter the lubricating oil and is not refracted. The oil detection device judges that the lubricating oil is not being supplied from the oil separator to the expander in a case where the light receiver receives the light, and judges that the lubricating oil is being supplied in a case where the light receiver does not receive the light. In such a way, the oil detection device determines whether or not the lubricating oil is being supplied from the oil separator to the expander. Further, the reception of the light of the light receiver depends on the refraction occurring when the light emitted from the light emitter enters the lubricating oil. Thus, even when the lubricating oil is transparent, the oil detection device can detect whether or not there is the lubricating oil supplied from the oil separator to the expander. The lubricating oil mixed in the working medium is separated from the working medium in the oil separator. Thus, the working medium is not easily mixed in the lubricating oil supplied from the oil separator to the expander. Therefore, bubbles of the working medium do not easily exist in the lubricating oil supplied from the oil separator to the expander. Thus, the light emitted from the light emitter can advance without being influenced by the bubbles. Therefore, it is possible to prevent erroneous detection in which the light receiver receives the light emitted from the light emitter for example even when the lubricating oil is being supplied by a pathway of the light emitted from the light emitter straying due to the influence of the bubbles.

In the above configuration, the oil separator may be arranged between the heater and the expander.

With this configuration, the working medium has a high temperature due to heating by the heater at the time of being separated from the lubricating oil in the oil separator. Thus, the working medium is not easily liquefied in the oil separator. Therefore, in the oil separator, part of the working medium is not easily liquefied and mixed in the lubricating oil to be supplied to the expander. Thus, the pathway of the light emitted from the light emitter does not easily stray due to the influence of the working medium.

In the above configuration, the light receiver may be arranged on a pathway of the light when the light emitted from the light emitter is not refracted by the lubricating oil.

With this configuration, the light receiver can be positioned in a state where there is no lubricating oil in the oil supply pipe. Thus, the light receiver is more easily positioned with respect to the light emitter.

In the above configuration, the oil detection device may have an oil reservoir recessed downward in the oil supply pipe. The light emitter may be arranged in such a manner that the light emitted from the light emitter passes through a recessed space defined by the oil reservoir.

With this configuration, the oil reservoir recessed downward in the oil supply pipe is provided. Thus, even when a supply amount of the lubricating oil is small, part of the lubricating oil stays in the recessed space defined by the oil reservoir while the lubricating oil is being supplied from the oil separator to the expander. Further, the light emitter is arranged in such a manner that the light emitted from the light emitter passes through the recessed space defined by the oil reservoir. Thus, the light emitted from the light emitter easily enters the lubricating oil in the recessed space. Therefore, it is possible to prevent the light emitted from the light emitter from not passing through the lubricating oil even when the lubricating oil is being supplied from the oil separator to the expander.

In the above configuration, the oil detection device may have a reflection board that reflects the light emitted from the light emitter and transmitted through the first light transmission portion.

With this configuration, the light emitted from the light emitter and transmitted through the first light transmission portion is reflected on the reflection board. Thus, light path length from the light emitter to the light receiver is increased. Therefore, the pathway of the light that enters the lubricating oil and is refracted largely strays from the pathway of the light in a case where the light does not enter the lubricating oil and is not refracted. Thus, the oil detection device more easily detects whether or not the lubricating oil is being supplied based on the reception of the light of the light receiver. Further, due to the existence of the reflection board, even when an incident angle of the light emitted from the light emitter with respect to the first light transmission portion is increased, the light can be brought out of the oil supply pipe through the second light transmission portion. Therefore, while the light emitter is arranged in the direction in which the light emitted from the light emitter is refracted when entering the lubricating oil, the light emitted from the light emitter is more easily brought out of the oil supply pipe through the second light transmission portion. That is, the light emitter is easily positioned.

In the above configuration, the plural reflection boards may be arranged so that the light emitted from the light emitter is reflected plural times.

With this configuration, the light emitted from the light emitter is reflected on the plural reflection boards for plural times. Thus, the light path length from the light emitter to the light receiver is more increased. Therefore, the pathway of the light emitted from the light emitter further largely strays. Thus, the pathway of the light that enters the lubricating oil and is refracted more largely strays from the pathway of the light when the light does not enter the lubricating oil and is not refracted. Therefore, the oil detection device more easily detects whether or not the lubricating oil is being supplied based on the reception of the light of the light receiver. Further, due to the existence of the plural reflection boards, even when the incident angle of the light emitted from the light emitter with respect to the first light transmission portion is further increased, the light can be brought out of the oil supply pipe through the second light transmission portion. Therefore, while the light emitter is arranged in the direction in which the light emitted from the light emitter is refracted when entering the lubricating oil, the light emitted from the light emitter is much more easily brought out of the oil supply pipe through the second light transmission portion. That is, the light emitter is much more easily positioned.

In the above configuration, the light emitted from the light emitter may be laser light.

With this configuration, directivity of the light emitted from the light emitter is high. Thus, for example, the light receiver is more easily prevented from receiving the light even when the light emitted from the light emitter enters the lubricating oil and is refracted.

In the above configuration, the oil detection device may include an enclosure that encloses the first and second light transmission portions, the light emitter, and the light receiver.

With this configuration, the first and second light transmission portions, the light emitter, and the light receiver are enclosed by the enclosure. Thus, it is possible to prevent dust around the oil detection device from coming inside the enclosure and attaching to the light transmission portions. Therefore, for example, it is possible to prevent the light receiver from not receiving the light even when the lubricating oil is not being supplied due to reflection of the light emitted from the light emitter by the dust attached to the first and second light transmission portions.

An oil detection method according to the present invention includes an oil separation step of separating lubricating oil mixed in a working medium from the working medium in an oil separator of a thermal energy recovery device, an oil supply step of supplying the lubricating oil separated in the oil separator from the oil separator to an expander, and an oil detection step of emitting light from a light emitter toward a light transmission portion through which the light is transmitted to the inside of an oil supply pipe that supplies the lubricating oil from the oil separator to the expander, and with reception of the light of the light receiver depending on refraction occurring when the emitted light enters the lubricating oil inside the oil supply pipe, detecting whether or not there is the lubricating oil supplied to the expander based on the reception of the light.

With this configuration, the reception of the light depends on the refraction occurring when the light emitted toward the light transmission portion enters the lubricating oil inside the oil supply pipe, and whether or not there is the lubricating oil supplied to the expander is detected based on this reception of the light. Therefore, whether or not there is the lubricating oil supplied to the expander is determined. Further, the reception of the light of the light receiver depends on the refraction occurring when the light emitted from the light emitter enters the lubricating oil. Thus, even when the lubricating oil is transparent, whether or not there is the lubricating oil supplied to the expander can be detected. Further, in the oil separation step, the lubricating oil mixed in the working medium is separated from the working medium. Thus, the working medium is not easily mixed in the lubricating oil supplied from the oil separator to the expander. Therefore, bubbles of the working medium do not easily exist in the lubricating oil supplied from the oil separator to the expander. Thus, the light emitted toward the light transmission portion can advance without being influenced by the bubbles of the working medium. Therefore, it is possible to prevent erroneous detection in which the light receiver receives the light emitted from the light emitter for example even when the lubricating oil is being supplied by a pathway of the light emitted toward the light transmission portion straying due to the influence of the bubbles.

According to the present invention, it is possible to determine whether or not the lubricating oil is being supplied from the oil separator to the expander.

### BRIEF DESCRIPTION OF THE DRAWINGS

FIG. 1 is a schematic configuration diagram showing a thermal energy recovery device according to a first embodiment.
FIG. 2 is a schematic configuration diagram showing an oil detection device of the thermal energy recovery device according to the first embodiment.
FIG. 3 is a view showing an oil reservoir of the oil detection device of the thermal energy recovery device according to the first embodiment.
FIG. 4 is a view showing a pathway of light emitted from a light emitter of the oil detection device of the thermal energy recovery device according to the first embodiment.
FIG. 5 is another view showing the pathway of the light emitted from the light emitter of the oil detection device of the thermal energy recovery device according to the first embodiment.
FIG. 6 is a view showing an oil detection device of a thermal energy recovery device according to a second embodiment.
FIG. 7 is a view showing a pathway of light emitted from a light emitter of the oil detection device of the thermal energy recovery device according to the second embodiment.
FIG. 8 is a view showing an oil detection device of a thermal energy recovery device according to a modified example of the second embodiment.

### DESCRIPTION OF THE PREFERRED EMBODIMENTS

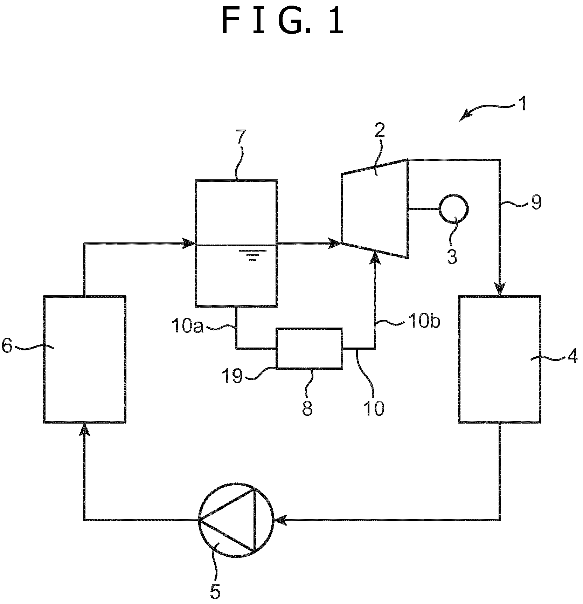

Hereinafter, embodiments of the present invention will be described with reference to the drawings. However, in the figures to be cited in the following description, for convenience of the description, major constituent elements required for describing a thermal energy recovery device 1 according to the embodiments of the present invention are simplified. Therefore, the thermal energy recovery device 1 according to the embodiments of the present invention can include arbitrary constituent elements not shown in the figures to be cited in this description. Hereinafter, with reference to FIG. 1, a thermal energy recovery device 1 according to a first embodiment will be described.

As shown in FIG. 1, the thermal energy recovery device 1 has an expander 2, a power recovery unit 3, a condenser 4, a pump 5, a heater 6, an oil separator 7, and an oil detection device 8. The thermal energy recovery device 1 further has a working medium circulation pipe 9 connecting the expander 2, the condenser 4, the pump 5, the heater 6, and the oil separator 7 in this order, the working medium circulation pipe through which a working medium is circulated, and an oil supply pipe 10 through which lubricating oil is supplied from the oil separator 7 to the expander 2.

The oil supply pipe 10 has a first oil supply pipe 10a, a second oil supply pipe 10b, and a flow passage portion 19. The first oil supply pipe 10a connects a lower portion of the oil separator 7 and the flow passage portion 19. The second oil supply pipe 10b connects the flow passage portion 19 and the expander 2. The flow passage portion 19 is provided between the first oil supply pipe 10a and the second oil supply pipe 10b. The flow passage portion 19 is formed in a hollow shape, and an internal space 19a of the flow passage portion communicates with a passage in the first oil supply pipe 10a and a passage in the second oil supply pipe 10b. Therefore, the internal space 19a of the flow passage portion 19 forms an oil supply passage through which the lubricating oil flows together with the passage in the first oil supply pipe 10a and the passage in the second oil supply pipe 10b. As the flow passage portion 19, for example, a sight glass connected to a pipe, the sight glass to be used by an operator to recognize a fluid flowing in the pipe by his/her own eyes can be used.

The lubricating oil can be used, for example, to be supplied to a bearing that supports a rotor shaft of a screw rotor of the expander 2.

The expander 2 expands a gaseous working medium. As the working medium, an organic refrigerant (such as HFC245fa) is used.

The power recovery unit 3 is connected to the expander 2. The power recovery unit 3 can be used, for example, as a power generator to be driven and rotated by expansion energy of the gaseous working medium which is expanded in the expander 2.

The condenser 4 is provided in a part of the working medium circulation pipe 9 on the downstream side of the expander 2. The condenser 4 condenses the working medium by exchanging heat between the gas-phase working medium flowing out of the expander 2 and a cooling medium (such as cooling water) supplied from a cooling source.

The pump 5 is provided in a part of the working medium circulation pipe 9 on the downstream side of the condenser 4. The pump 5 pressurizes the liquid-phase working medium condensed in the condenser 4 to predetermined pressure and feeds to the heater 6.

The heater 6 is provided in a part of the working medium circulation pipe 9 on the downstream side of the pump 5. The heater 6 heats the working medium by exchanging heat between the liquid-phase working medium pressurized in the pump 5 and a heat source medium (such as hot water and exhaust gas) supplied from a heat source. In the first embodiment, an evaporator that evaporates the liquid-phase working medium is used.

The oil separator 7 is provided on the downstream side of the heater 6 in the working medium circulation pipe 9 between the heater 6 and the expander 2. The oil separator 7 separates the lubricating oil mixed in the working medium from the working medium by a specific gravity difference. The lubricating oil separated from the working medium is accumulated in a lower part in the oil separator 7. Meanwhile, the gas-phase working medium from which the lubricating oil is separated is moved to the upper side of the lubricating oil in the oil separator 7. The oil separator 7 may be provided on the downstream side of the expander 2 in the working medium circulation pipe 9 between the expander 2 and the condenser 4.

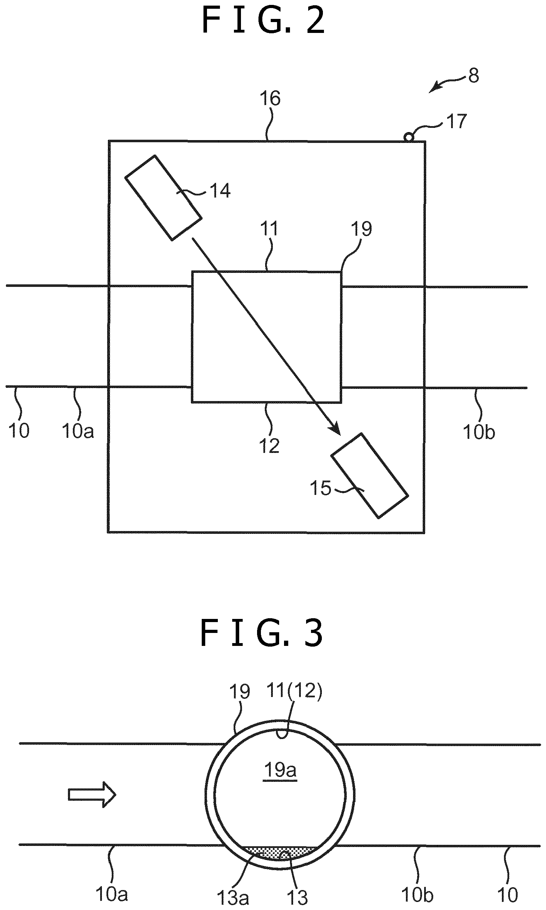

Hereinafter, with reference to FIGS. 2 and 3, the oil detection device 8 will be described. The oil detection device 8 has a first light transmission portion 11, a second light transmission portion 12, an oil reservoir 13, a light emitter 14, a light receiver 15, a working unit 17, and an enclosure 16, and detects whether or not there is the lubricating oil supplied from the oil separator 7 to the expander 2.

The first and second light transmission portions 11, 12 are formed by making part of wall surfaces of the flow passage portion 19 in the direction along the oil supply pipe 10 transparent and forming into a circular shape, and through the light transmission portions, the light is transmitted to the inside and the outside of the flow passage portion 19. The first and second light transmission portions 11, 12 are arranged so as to oppose each other in the substantially horizontal direction on the wall surfaces of the flow passage portion 19. The first and second light transmission portions 11, 12 are formed in a flat plate shape. That is, through the first and second light transmission portions 11, 12, whether or not there is the lubricating oil is found. Regarding the first and second light transmission portions 11, 12, in a case where a sight glass is used as the flow passage portion 19, transparent windows of the sight glass can serve as the first and second light transmission portions 11, 12. The oil supply pipe 10 may be formed as a single pipe. In this case, wall surfaces of the oil supply pipe 10 may form a passage having a square section and the entire wall surfaces may be transparent. The first and second light transmission portions 11, 12 are set at portions opposing each other in the substantially horizontal direction in transparent parts of the wall surfaces of the oil supply pipe 10. Part of the wall surfaces of the oil supply pipe 10 may be transparent.

As shown in FIG. 3, the oil reservoir 13 is a part recessed downward more than lower ends of the first and second oil supply pipes 10a, 10b in the flow passage portion 19. Therefore, the internal space 19a of the flow passage portion 19 has a recessed space 13a defined by the oil reservoir 13, and the lubricating oil flows from the first oil supply pipe 10a and stays in the recessed space 13a. The oil reservoir 13 and the recessed space 13a are formed to extend from a position adjacent to the first light transmission portion 11 to a position adjacent to the second light transmission portion 12. The oil reservoir 13 may be omitted.

The light emitter 14 emits light from the outside of the first light transmission portion 11 toward the first light transmission portion 11. The light emitted from the light emitter 14 is not particularly limited as long as the light can be transmitted through the first and second light transmission portions 11, 12. For example, laser light can be used. The light emitter 14 is arranged in the direction in which the light can pass through the recessed space 13a defined by the oil reservoir 13 through the first light transmission portion 11, and the light passing through the recessed space 13a can be brought out of the recessed space 13a through the second light transmission portion 12. Further, the light emitter 14 is arranged in the direction in which the light emitted from the light emitter 14 is refracted when entering the lubricating oil in the recessed space 13a. Specifically, as shown in FIG. 2, the light emitter 14 is arranged in such a manner that the light emitted from the light emitter 14 obliquely passes through the first light transmission portion 11. In a case where the oil reservoir 13 is omitted, the light emitter 14 is arranged in the direction in which the light emitted from the light emitter 14 can pass through the internal space 19a of the flow passage portion 19 through the first light transmission portion 11, and can be brought out of the internal space 19a through the second light transmission portion 12.

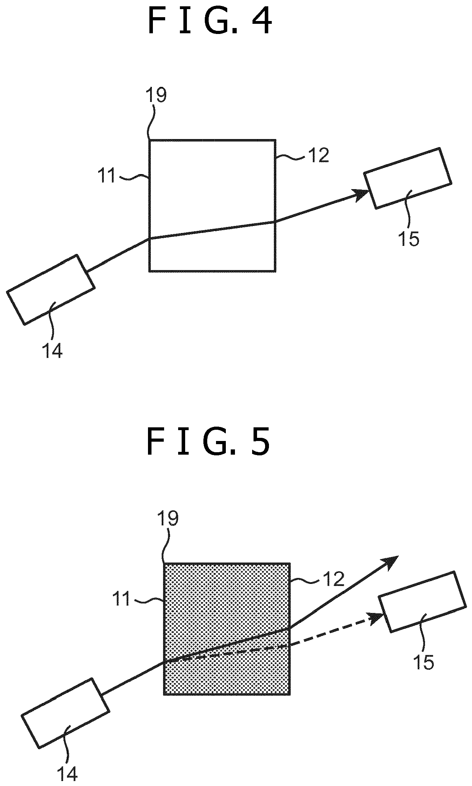

The light receiver 15 is arranged on the outer side of the second light transmission portion 12 at such a position that reception of the light depends on refraction occurring when the light emitted from the light emitter 14 enters the lubricating oil in the recessed space 13a defined by the oil reservoir 13. Specifically, the light receiver 15 is arranged at a position on a pathway of the light emitted from the light emitter 14 upon the lubricating oil being not accumulated in the recessed space 13a (see a solid arrow of FIG. 4 and a broken arrow of FIG. 5), the position straying from a pathway of the light when the light emitted from the light emitter 14 upon the lubricating oil being accumulated in the recessed space 13a is refracted by entering the lubricating oil of the recessed space 13a (see a solid arrow of FIG. 5). Thereby, in a case where the light emitted from the light emitter 14 does not pass through the lubricating oil of the recessed space 13a, the light receiver 15 receives the light emitted from the light emitter 14. Meanwhile, in a case where the light emitted from the light emitter 14 passes through the lubricating oil of the recessed space 13a and refraction occurs, the light receiver 15 does not receive the light emitted from the light emitter 14. The light receiver 15 may be arranged at a position on the pathway of the light when the light emitted from the light emitter 14 passes through the lubricating oil of the recessed space 13a and is refracted, the position straying from the pathway of the light upon the lubricating oil being not accumulated in the recessed space 13a. The light receiver 15 is electrically connected to the working unit 17, and formed to send a signal to the working unit 17 upon receiving the light emitted from the light emitter 14.

As shown in FIG. 2, the working unit 17 is installed on the outside of the enclosure 16, and formed to be lit upon receiving a signal from the light receiver 15. Working of the working unit 17 may be for example beeping but is not limited to this. The working of the working unit 17 may be anything as long as the operator can find that the lubricating oil to be supplied from the oil separator 7 to the expander 2 is gone, and the working unit may let the operator know by any methods.

The enclosure 16 is formed in a box shape so as to cover the first and second light transmission portions 11, 12, the light emitter 14, and the light receiver 15, and seals the inside so that dust and light do not come in. The enclosure 16 may be omitted.

An oil detection method of the lubricating oil supplied from the oil separator 7 to the expander 2 by using the thermal energy recovery device 1 formed as above will be described.

When the above thermal energy recovery device 1 is driven, the working medium is circulated through the heater 6, the oil separator 7, the expander 2, and the condenser 4 in this order in the working medium circulation pipe 9 by discharge pressure of the pump 5, and thermal energy of the heat source medium is recovered in the power recovery unit 3 via the working medium. At this time, an oil separation step of separating the lubricating oil mixed in the working medium from the working medium in the oil separator 7, an oil supply step of supplying the lubricating oil separated in the oil separation step from the oil separator 7 to the expander 2, and an oil detection step of detecting whether or not there is the lubricating oil supplied from the oil separator 7 to the expander 2.

In the oil separation step, in the oil separator 7, the lubricating oil mixed with the gas-phase working medium evaporated in the heater 6 is separated from the working medium by the specific gravity difference. Since the lubricating oil separated from the working medium has greater specific gravity than the gas-phase working medium, the lubricating oil is accumulated in the lower part in the oil separator 7. Meanwhile, the gas-phase working medium has smaller specific gravity than the lubricating oil, the working medium is moved to the upper side of the lubricating oil in the oil separator 7.

In the oil supply step, the lubricating oil accumulated in the oil separator 7 is supplied to the expander 2 through the oil supply pipe 10.

In the oil detection step, first, light is emitted from the light emitter 14 toward the recessed space 13a defined by the oil reservoir 13 through the first light transmission portion 11. At this time, when entering the lubricating oil in the recessed space 13a, the light emitted from the light emitter 14 is refracted as shown by the solid line of FIG. 5. This light is brought out of the recessed space 13a through the second light transmission portion 12 and advances so as to stray from the light receiver 15. The light receiver 15 neither receives the light emitted from the light emitter 14 nor sends a signal to the working unit 17. As a result, the working unit 17 does not work. By confirming that the working unit 17 does not work, the operator can find that the lubricating oil is being supplied to the expander 2.

Meanwhile, in a case where there is no lubricating oil in the recessed space 13a, the light emitted from the light emitter 14 does not enter the lubricating oil. Thus, no refraction of the light due to passage through the lubricating oil occurs, and the light advances as shown by the broken arrow of FIG. 5. At this time, the light receiver 15 receives the light emitted from the light emitter 14 and sends a signal to the working unit 17. Upon receiving the signal from the light receiver 15, the working unit 17 works. By confirming that the working unit 17 is working, the operator can find that the lubricating oil is not being supplied from the oil separator 7 to the expander 2.

With the thermal energy recovery device 1 of the first embodiment, the light receiver 15 is arranged at the position on the pathway of the light when the light emitted from the light emitter 14 does not enter the lubricating oil, the position straying from the pathway of the light when the light emitted from the light emitter 14 enters the lubricating oil and is refracted. Therefore, in a case where the light emitted from the light emitter 14 does not enter the lubricating oil and is not refracted, the light receiver 15 receives the light. Meanwhile, in a case where the light emitted from the light emitter 14 enters the lubricating oil and is refracted, the light receiver 15 does not receive the light. In such a way, the reception of the light of the light receiver 15 is changed between the case where the light emitted from the light emitter 14 enters the lubricating oil and is refracted and the case where the light does not enter the lubricating oil and is not refracted. Therefore, the oil detection device 8 can determine whether or not the lubricating oil is being supplied from the oil separator 7 to the expander 2 based on the reception of the light of the light receiver 15.

Further, the reception of the light of the light receiver 15 depends on the refraction occurring when the light emitted from the light emitter 14 enters the lubricating oil. Thus, even when the lubricating oil is transparent, the oil detection device 8 can detect whether or not there is the lubricating oil supplied from the oil separator 7 to the expander 2.

The lubricating oil mixed in the working medium is separated from the working medium in the oil separator 7. Thus, the working medium is not easily mixed in the lubricating oil supplied from the oil separator 7 to the expander 2. Therefore, the working medium does not easily exist in the lubricating oil supplied from the oil separator 7 to the expander 2. Thus, the light emitted from the light emitter 14, the light entering the lubricating oil can advance without being influenced by the working medium. Therefore, it is possible to prevent erroneous detection in which the light receiver 15 receives the light emitted from the light emitter 14 even when the lubricating oil is being supplied from the oil separator 7 to the expander 2 by the pathway of the light emitted from the light emitter 14 straying due to the influence of the working medium.

With the thermal energy recovery device 1 of the first embodiment, the oil separator 7 is provided on the downstream side of the heater 6 in the working medium circulation pipe 9 between the heater 6 and the expander 2. Therefore, the working medium has a high temperature due to heating by the heater 6 at the time of being separated from the lubricating oil in the oil separator 7. Thus, the working medium is not easily liquefied in the oil separator 7. Therefore, in the oil separator 7, part of the working medium is less easily liquefied and mixed in the lubricating oil. Thus, in the pathway of the light emitted from the light emitter 14, the influence of the working medium in the lubricating oil is reduced.

With the thermal energy recovery device 1 of the first embodiment, the light receiver 15 is arranged on the pathway of the light when the light emitted from the light emitter 14 does not enter the lubricating oil. Thus, the light receiver can be positioned in a state where there is no lubricating oil in the internal space 19a of the flow passage portion 19. Therefore, the light receiver 15 is more easily positioned with respect to the light emitter 14.

With the thermal energy recovery device 1 of the first embodiment, the oil detection device 8 has the oil reservoir 13 recessed downward in the flow passage portion 19 where the lubricating oil is accumulated. Thus, even when a supply amount of the lubricating oil supplied from the oil separator 7 to the expander 2 is small, part of the lubricating oil stays in the recessed space 13a defined by the oil reservoir 13 while the lubricating oil is being supplied. Further, the light emitter 14 is arranged in such a manner that the light emitted from the light emitter 14 passes through the recessed space 13a. Thus, the light emitted from the light emitter 14 enters the lubricating oil even when the supply amount of the lubricating oil is small. Therefore, it is possible to prevent the light emitted from the light emitter 14 from not entering the lubricating oil even when the lubricating oil is being supplied.

With the thermal energy recovery device 1 of the first embodiment, the oil detection device 8 has the enclosure 16 that encloses the first and second light transmission portions 11, 12, the light emitter 14, and the light receiver 15. Thus, it is possible to prevent dust around the oil detection device 8 from coming inside the enclosure 16 and attaching to the first and second light transmission portions 11, 12. Therefore, the light emitted from the light emitter 14 is prevented from reflecting on the dust attached to the first and second light transmission portions 11, 12. Thus, it is possible to prevent the light receiver 15 from not receiving the light emitted from the light emitter 14 even when no oil exists in the recessed space 13a.

With the thermal energy recovery device 1 of the first embodiment, the light emitted from the light emitter 14 is laser light and hence directivity of the light is high. Therefore, the light receiver 15 is more easily prevented from receiving the light even when the light emitted from the light emitter 14 enters the lubricating oil and is refracted in the oil reservoir 13.

The thermal energy recovery device 1 described above is one embodiment of the present invention and specific configurations thereof can be appropriately changed within the range not departing from the gist of the present invention. Hereinafter, a modified example of the first embodiment will be described.

In the above thermal energy recovery device 1, as the heater 6, the evaporator that evaporates the liquid-phase working medium pressurized in the pump 5 is used. However, the heater may include the above evaporator and a superheater that superheats the gas-phase working medium evaporated in the evaporator.

The heater 6 may include a pre-heater that pre-heats the liquid-phase working medium pressurized in the pump 5, an evaporator that evaporates the liquid-phase working medium pre-heated by the pre-heater, and a superheater that superheats the gas-phase working medium evaporated in the evaporator.

Hereinafter, a thermal energy recovery device of a second embodiment will be described. Elements corresponding to the thermal energy recovery device 1 of the first embodiment will be given the same reference signs as the first embodiment, and description thereof will be omitted.

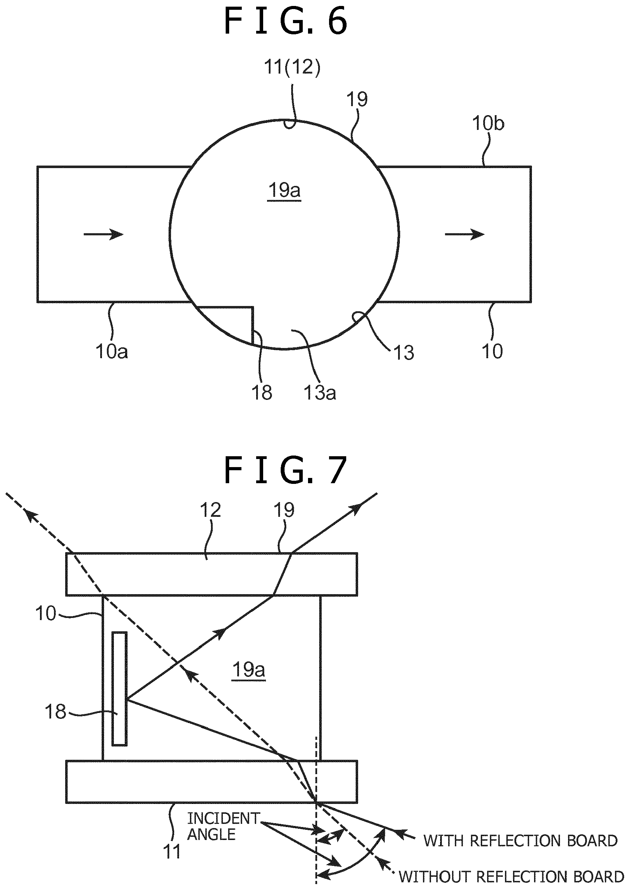

The thermal energy recovery device of the second embodiment is different from the first embodiment in a point that, as shown in FIGS. 6 and 7, an oil detection device 8 further has a reflection board 18 that reflects light emitted from a light emitter 14 in a recessed space 13a defined by an oil reservoir 13. The reflection board 18 is arranged on the upstream side in the flowing direction of lubricating oil in the recessed space 13a, and directed to the downstream side in the flowing direction of the lubricating oil. Arrangement of the reflection board 18 is not limited to the recessed space 13a but may be within an internal space 19a of a flow passage portion 19. The reflection board 18 may be arranged on the downstream side in the flowing direction of the lubricating oil in the recessed space 13a. In this case, the reflection board 18 is installed to be directed to the upstream side in the flowing direction of the lubricating oil. As the reflection board 18, for example, a metal member whose surface is mirror-finished or a reflection mirror can be used but the reflection board is not limited to these. Any member that is capable of reflecting the light emitted from the light emitter 14 can be adopted as the reflection board 18.

In the thermal energy recovery device of the second embodiment, the light emitted from the light emitter 14 is reflected on the reflection board 18 as shown in FIG. 7. Thus, light path length from the light emitter 14 to a light receiver 15 is increased. Therefore, a pathway of the light that enters the lubricating oil and is refracted largely strays from a pathway of the light when the light does not enter the lubricating oil and is not refracted. Thus, the oil detection device 8 more easily detects whether or not the lubricating oil is being supplied based on reception of the light of the light receiver 15.

Further, due to the existence of the reflection board 18, even when an incident angle of the light emitted from the light emitter 14 with respect to a first light transmission portion 11 is increased, the light can be brought out of the recessed space 13a in the internal space 19a of the flow passage portion 19 through a second light transmission portion 12 (see FIG. 7). Therefore, while the light emitter 14 is arranged in the direction in which the light emitted from the light emitter 14 is refracted when entering the lubricating oil in the recessed space 13a, the light emitted from the light emitter 14 is more easily brought out of the recessed space 13a of the flow passage portion 19 through the second light transmission portion 12. That is, the light emitter 14 is easily positioned.

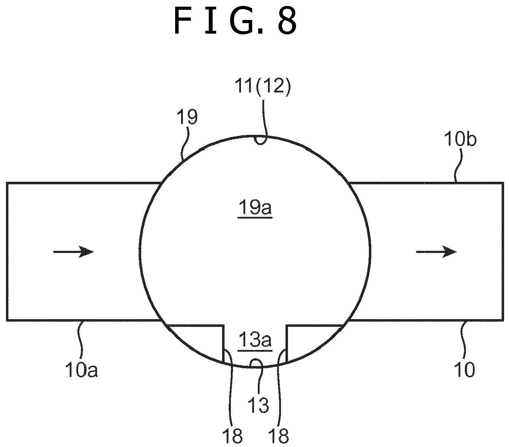

In the thermal energy recovery device of the second embodiment, as shown in FIG. 8, plural reflection boards 18 may be arranged in the recessed space 13a defined by the oil reservoir 13 so as to reflect the light emitted from the light emitter 14 for plural times. In the example of FIG. 8, two reflection boards 18 are respectively arranged on the upstream side and the downstream side in the flowing direction of the lubricating oil in the recessed space 13a. In such a way, the light emitted from the light emitter 14 is reflected at least twice on the two reflection boards 18. Thus, the light path length from the light emitter 14 to the light receiver 15 is increased in comparison to a case where the light is reflected once on the reflection board 18. Therefore, the pathway of the light that enters the lubricating oil and is refracted more largely strays from the pathway of the light in a case where the light does not enter the lubricating oil and is not refracted. Thus, the oil detection device 8 much more easily detects whether or not the lubricating oil is being supplied based on the reception of the light of the light receiver 15.

Further, due to the existence of the plural reflection boards 18, even when the incident angle of the light emitted from the light emitter 14 with respect to the first light transmission portion 11 is further increased, the light can be brought out of the recessed space 13a in the internal space 19a of the flow passage portion 19 through the second light transmission portion 12. Therefore, while the light emitter 14 is arranged in the direction in which the light emitted from the light emitter 14 is refracted when entering the lubricating oil, the light emitted from the light emitter 14 is much more easily brought out of the recessed space 13a through the second light transmission portion 12. That is, the light emitter 14 is much more easily positioned.

An oil detection device detecting lubricating oil separated in an oil separator and supplied to an expander has first and second light transmission portions through which light is transmitted to the inside/outside of an oil supply pipe supplying the lubricating oil from the oil separator to the expander, a light emitter emitting light toward the first light transmission portion, and a light receiver receiving the light emitted from the light emitter through the second light transmission portion. The light emitter is oriented such that the light emitted from the light emitter is refracted when entering the lubricating oil through the first light transmission portion. The light receiver is arranged such that reception of the light depends on refraction of the light emitted from the light emitter. The oil detection device detects the lubricating oil supplied to the expander based on the reception of the light by the light receiver.

## Claims

1. A thermal energy recovery device comprising:
an expander that expands a gaseous working medium;
a condenser that condenses the working medium expanded in the expander;
a pump that pressurizes the working medium condensed in the condenser;
a heater that heats the working medium pressurized in the pump with heat of a heat source medium;
an oil separator that separates lubricating oil mixed in the working medium from the working medium; and
an oil detection device that detects where or not there is the lubricating oil separated in the oil separator and supplied to the expander, wherein
the oil detection device has first and second light transmission portions through which light is transmitted to the inside and the outside of an oil supply pipe that supplies the lubricating oil from the oil separator to the expander, a light emitter that emits light toward the first light transmission portion, and a light receiver that receives the light emitted from the light emitter through the second light transmission portion,
the light emitter is arranged in the direction in which the light emitted from the light emitter is refracted when entering the lubricating oil through the first light transmission portion,
the light receiver is arranged at such a position that reception of the light depends on the refraction of the light emitted from the light emitter, and
the oil detection device detects whether or not there is the lubricating oil supplied to the expander based on the reception of the light by the light receiver.

2. The thermal energy recovery device according to claim 1, wherein
the oil separator is arranged between the heater and the expander.

3. The thermal energy recovery device according to claim 1 or 2, wherein
the light receiver is arranged on a pathway of the light when the light emitted from the light emitter is not refracted by the lubricating oil.

4. The thermal energy recovery device according to any one of claims 1 to 3, wherein
the oil detection device has an oil reservoir recessed downward in the oil supply pipe, and
the light emitter is arranged in such a manner that the light emitted from the light emitter passes through a recessed space defined by the oil reservoir.

5. The thermal energy recovery device according to any one of claims 1 to 4, wherein
the oil detection device has a reflection board that reflects the light emitted from the light emitter and transmitted through the first light transmission portion.

6. The thermal energy recovery device according to claim 5, wherein
the plural reflection boards are arranged so that the light emitted from the light emitter is reflected plural times.

7. The thermal energy recovery device according to any one of claims 1 to 6, wherein
the light emitted from the light emitter is laser light.

8. The thermal energy recovery device according to any one of claims 1 to 7, wherein
the oil detection device includes an enclosure that encloses the first and second light transmission portions, the light emitter, and the light receiver.

9. An oil detection method comprising:
an oil separation step of separating lubricating oil mixed in a working medium from the working medium in an oil separator of a thermal energy recovery device;
an oil supply step of supplying the lubricating oil separated in the oil separator from the oil separator to an expander; and
an oil detection step of emitting light from a light emitter toward a light transmission portion through which the light is transmitted to the inside of an oil supply pipe that supplies the lubricating oil from the oil separator to the expander, and with reception of the light of the light receiver depending on refraction occurring when the emitted light enters the lubricating oil inside the oil supply pipe, detecting whether or not there is the lubricating oil supplied to the expander based on the reception of the light.
